(19)

Europäisches
Patentamt
European
Patent Office
Office européen
des brevets

(11) **EP 2 915 827 A1**

(12) **EUROPEAN PATENT APPLICATION**
published in accordance with Art. 153(4) EPC

(43) Date of publication:
**09.09.2015 Bulletin 2015/37**

(21) Application number: **13850151.5**

(22) Date of filing: **01.11.2013**

(51) Int Cl.:
**C08F 261/04** (2006.01)     **C08F 2/20** (2006.01)
**C08L 29/04** (2006.01)     **C08L 31/02** (2006.01)
**C08L 51/00** (2006.01)

(86) International application number:
**PCT/JP2013/079675**

(87) International publication number:
**WO 2014/069616 (08.05.2014 Gazette 2014/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **05.11.2012 JP 2012244018**

(71) Applicant: **Kuraray Co., Ltd.**
**Okayama 710-0801 (JP)**

(72) Inventors:
• **FUKUHARA, Tadahito**
  **Kurashiki-shi**
  **Okayama 713-8550 (JP)**
• **KUMAKI, Yosuke**
  **Kurashiki-shi**
  **Okayama 713-8550 (JP)**

(74) Representative: **Müller-Boré & Partner**
**Patentanwälte PartG mbB**
**Friedenheimer Brücke 21**
**80639 München (DE)**

(54) **DISPERSION STABILIZER FOR SUSPENSION POLYMERIZATION AND METHOD FOR PRODUCING VINYL RESIN USING SAME**

(57)     There is provided a dispersion stabilizer for suspension polymerization of a vinyl compound, which is composed of an aqueous emulsion, wherein the aqueous emulsion comprises a solid comprising (A) a polyvinyl alcohol, (B) a polyvinyl ester, and (C) a graft polymer produced by graft-polymerizing a vinyl ester monomer to a polyvinyl alcohol; wherein the amount of (A) the polyvinyl alcohol is 0.1 to 18 % by mass based on the total amount of (A), (B) and (C); wherein the amount of (C) the graft polymer is 7 to 80 % by mass based on the total amount of (A), (B) and (C); and wherein a weight-average molecular weight of the solid as determined by gel permeation chromatography is 1,100,000 or less. Such a dispersion stabilizer for suspension polymerization exhibits excellent polymerization stability and excellent handleability. In addition, a vinyl resin obtained using the dispersion stabilizer for suspension polymerization has good plasticizer absorbency.

**Description**

TECHNICAL FIELD

The present invention relates to a dispersion stabilizer for suspension polymerization of a vinyl compound, which is composed of an aqueous emulsion, and a production method therefor. The present invention also relates to a method for producing a vinyl resin wherein a suspension polymerization of a vinyl compound is conducted in the presence of a dispersion stabilizer for suspension polymerization.

BACKGROUND ART

It is well-known that a partially saponified polyvinyl alcohol (hereinafter, a polyvinyl alcohol is sometimes abbreviated to as "PVA") is used as a dispersion stabilizer for suspension polymerization of a vinyl compound (for example, vinyl chloride). Effects required for a dispersion stabilizer for suspension polymerization include that a vinyl resin exhibiting higher plasticizer absorbency and excellent processability is provided; that remaining monomer components after polymerization can be easily removed; and that polymerization stability is improved, resulting in inhibition of formation of coarse resin particles. It is also required that even when a solid proportion is high, a dispersion stabilizer solution is stable and a dispersion stabilizer is excellent in handleability. A partially saponified PVA has, however, low solubility in water, so that a high-concentration aqueous solution cannot be obtained and handleability is unsatisfactory. Furthermore, polymerization stability is low.

In order to improve handleability of a dispersion stabilizer, attempts have been made for improving water solubility of a PVA. Patent Reference Nos. 1 and 2 have described a dispersion stabilizer for suspension polymerization, made using a PVA which is of a low polymerization degree and a low saponification degree and contains hydrophilic oxyalkylene side groups. However, the dispersion stabilizer still exhibits unsatisfactory handleability and is inadequately effective in improving plasticizer absorbency of a polymer obtained and in improving polymerization stability. Patent Reference Nos. 3 and 4 have described a dispersion stabilizer for suspension polymerization, which is made using a PVA containing ionic groups. However, the dispersion stabilizer is still unsatisfactory in handleability and insufficiently effective in improving polymerization stability.

Patent Reference No. 5 has described a dispersion stabilizer for suspension polymerization which is made using an aqueous emulsion. The dispersion stabilizer is, however, sometimes insufficient in plasticizer absorbency and polymerization stability.

PRIOR ART REFERENCES

Patent References

Patent Reference No. 1: JP 1997-100301 A.
Patent Reference No. 2: JP 1998-147604 A.
Patent Reference No. 3: JP 2007-063369 A.
Patent Reference No. 4: JP 1998-168128 A.
Patent Reference No. 5: JP 1997-132608 A.

SUMMARY OF THE INVENTION

PROBLEMS TO BE SOLVED BY THE INVENTION

An objective of the present invention is to provide a dispersion stabilizer for suspension polymerization of a vinyl compound such as vinyl chloride, which is excellent in polymerization stability, gives a vinyl resin with good plasticizer absorbency and is excellent in handleability. Another objective of the present invention is to provide a method for producing a vinyl resin wherein suspension polymerization is conducted in the presence of such a dispersion stabilizer for suspension polymerization.

MEANS FOR SOLVING THE PROBLEMS

In view of the present situation described above, we have made intense investigation. We have found that the above problems can be solved by a dispersion stabilizer for suspension polymerization of a vinyl compound, which is composed of an aqueous emulsion, wherein the aqueous emulsion comprises a solid comprising (A) a polyvinyl alcohol, (B) a polyvinyl ester, and (C) a graft polymer produced by graft-polymerizing a vinyl ester monomer to a polyvinyl alcohol; wherein the amount of (A) the polyvinyl alcohol is 0.1 to 18 % by mass based on the total amount of (A), (B) and (C); wherein the amount of (C) the graft polymer is 7 to 80 % by mass based on the total amount of (A), (B) and (C); and wherein a weight-average molecular weight of the solid as determined by gel permeation chromatography is 1,100,000 or less.

In the dispersion stabilizer for suspension polymerization, it is suitable that the total amount of (A) the polyvinyl alcohol, (B) the polyvinyl ester and (C) the graft polymer in the aqueous emulsion is 30 to 70 % by mass. It is also suitable that (B) the polyvinyl ester is a polyvinyl acetate.

The above problems can be also solved by a method for producing a dispersion stabilizer for suspension polymerization, wherein the aqueous emulsion is obtained by polymerizing the vinyl ester monomer in an aqueous medium in the presence of (A) the polyvinyl alcohol.

It is suitable that 100 parts by mass of the vinyl ester monomer based on 1 to 32 parts by mass of (A) the polyvinyl alcohol is polymerized. It is also suitable that the polymerization is conducted in the presence of a chain transfer agent. It is also suitable that a reaction rate of (A) the polyvinyl alcohol as a raw material is 20 to 97 % by mass.

A suitable embodiment of the present invention is a method for producing a vinyl resin, wherein a suspension-polymerization of a vinyl compound is conducted in an aqueous medium in the presence of the dispersion stabilizer for suspension polymerization. It is suitable that a mass ratio of the vinyl compound to the aqueous medium (vinyl compound/aqueous medium) is 0.75 to 1.25.

EFFECTS OF THE INVENTION

A dispersion stabilizer for suspension polymerization of the present invention is very effective in improving polymerization stability. In particular, even when polymerization is conducted under the conditions where the polymerization tends to be unstable, formation of coarse particles is inhibited, giving particles with a uniform particle size. A dispersion stabilizer for suspension polymerization of the present invention is also very effective in improving plasticizer absorbency of a resin obtained. In particular, even when a small amount of the dispersion stabilizer is used, vinyl resin particles which exhibit high plasticizer absorbency and good processability are obtained. Furthermore, a dispersion stabilizer for suspension polymerization of the present invention can stabilize an emulsion and is excellent in handleability and productivity, even when a solid proportion is high.

MODES FOR CARRYING OUT THE INVENTION

[Dispersion stabilizer for suspension polymerization]

A dispersion stabilizer for suspension polymerization of a vinyl compound according to the present invention is comprised of an aqueous emulsion (hereinafter, an aqueous emulsion is sometimes abbreviated as an "emulsion"), and the aqueous emulsion contains a solid containing (A) a PVA, (B) a polyvinyl ester, and (C) a graft polymer produced by graft-polymerizing a vinyl ester monomer to a polyvinyl alcohol; the amount of (A) the PVA is 0.1 to 18 % by mass based on the total amount of (A), (B) and (C); the amount of (C) the graft polymer is 7 to 80 % by mass based on the total amount of (A), (B) and (C); and a weight-average molecular weight of the solid as determined by gel permeation chromatography is 1,100,000 or less.

An emulsion of the present invention contains contains, as a solid, (A) a polyvinyl alcohol, (B) a polyvinyl ester, and (C) a graft polymer produced by graft-polymerizing a vinyl ester monomer to a polyvinyl alcohol. Among these, (A) the PVA acts as a dispersing agent. When a suspension polymerization is conducted using the emulsion as a dispersion stabilizer, (A) the PVA improves hydrophilicity of the emulsion, so that surface activating effect is strengthened, polymerization stability is improved and plasticizer absorbency of a vinyl resin obtained is improved.

In the light of further stabilizing the emulsion, further improving performance of the emulsion as a dispersion stabilizer for suspension polymerization by further improvement of hydrophilicity of of the emulsion, and easy controlling the content of (C) the graft polymer when the emulsion is obtained by a dispersion stabilizer for suspension polymerization of the present invention as described later, a saponification degree of (A) the PVA in the emulsion of the present invention is preferably 50 mol% or more, more preferably 60 mol% or more, further preferably 70 mol% or more, particularly preferably 73 mol% or more. A saponification degree of (A) the PVA is preferably 99.5 mol% or less, more preferably 95 mol% or less, further preferably 90 mol% or less, particularly preferably 85 mol% or less. A saponification degree of (A) the PVA is a value as determined in accordance with JIS-K6726.

In the light of stabilization of the emulsion and further improving performance of the emulsion as a dispersion stabilizer for suspension polymerization, a viscosity average polymerization degree of (A) the PVA is preferably 100 to 8000, more preferably 100 to 4000, further preferably 150 to 3000. A viscosity average polymerization degree of (A) the PVA is calculated using Nakajima's equation (Akio Nakajima, "Kobunshi Kagaku" (Polymer Chemistry) 6(1949)) from a limiting viscosity of an acetone solution of a polyvinyl ester which is produced by substantially completely saponifying the PVA and acetylizing the product.

A PVA (A) can be obtained by polymerizing a vinyl ester monomer by a well-known method and then saponifying the polymer obtained as usual. The polymerization method of a vinyl ester monomer can be any known method such as solution polymerization, bulk polymerization, suspension polymerization and emulsion polymerization. A polymerization catalyst can be appropriately selected from azo catalysts, peroxide catalysts and redox catalysts depending on a polymerization method. A saponification reaction can be alcoholysis using a well-known alkali or acid catalyst, hydrolysis or the like. Among these, a saponification reaction using methanol as a solvent and sodium hydroxide (NaOH) as a catalyst is convenient and most preferred.

There are no particular restrictions to a vinyl ester monomer used for producing (A) a PVA; examples include vinyl formate, vinyl acetate, vinyl propionate, vinyl butyrate, vinyl isobutyrate, vinyl pivalate, vinyl versate, vinyl caproate, vinyl caprylate, vinyl laurate, vinyl palmitate, vinyl stearate, vinyl oleate and vinyl acetate. Among these, vinyl acetate is most preferable.

A PVA (A) can be a copolymer with an additional monomer without departing from the scope of the present invention. Examples of a monomer which can be used for synthesizing such a PVA include $\alpha$-olefins such as ethylene, propylene, n-butene and isobutylene; acrylic acid and its salts; acrylamide; acrylamide derivatives such as N-methylacrylamide, N-ethylacrylamide, N,N-dimethylacrylamide, diacetone acrylamide, acrylamidepropanesulfonic acid and its salts, acrylamidepropyldimethylamine and its salts or quaternary salts, and N-methylolacrylamide and its derivatives; methacrylamide; methacrylamide derivatives such as N-methylmethacrylamide, N-ethylmethacrylamide, methacrylamidepropanesulfonic acid and its salts, methacrylamidepropyldimethylamine and its salts or quaternary salts, N-methylolmethacrylamide and its derivatives; vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, stearyl vinyl ether and 2,3-diacetoxy-1-vinyloxypropane; nitriles such as acrylonitrile and methacrylonitrile; vinyl halides such as vinyl chloride and vinyl fluoride; vinylidene halides such as vinylidene chloride and vinylidene fluoride; allyl compounds such as allyl acetate, 2,3-diacetoxy-1-allyloxypropane and allyl chloride; unsaturated carboxylic acids such as maleic acid, itaconic acid and fumaric acid and their salts or esters; vinylsilyl compounds such as vinyltrimethoxysilane; and isopropenyl acetate. A proportion of copolymerization with such an additional monomer in (A) the PVA is generally 10 mol% or less. Furthermore, a polyvinyl alcohol with a high content of 1,2-glycol which is produced by saponifying a polymer obtained by polymerization of a vinyl ester monomer at a higher temperature than the common polymerization conditions can be also preferably used as (A) a PVA. Here, a content of 1,2-glycol bonds is, but not limited to, 1.9 mol% or more, preferably 2.0 mol% or more, further preferably 2.1 mol% or more. With a content of 1,2-glycol bonds within the above range, a dispersion stabilizer in which particles in the emulsion have a smaller size can be obtained.

For the purpose of adjusting a polymerization degree in synthesizing (A) a PVA and introducing terminal modified groups, a chain transfer agent can be used without departing from the scope of the present invention. Examples of a chain transfer agent include aldehydes such as acetaldehyde and propionaldehyde; ketones such as acetone and methyl ethyl ketone; thiols such as 2-hydroxyethanethiol, 3-mercaptopropionic acid, dodecanethiol and thioacetic acid; halogenated hydrocarbons such as carbon tetrachloride, trichloroethylene and perchloroethylene; and phosphinates such as sodium phosphinate monohydrate. Among these, thiols, aldehydes and ketones are suitably used. The amount of the chain transfer agent can be determined, depending on a chain transfer constant of a chain transfer agent added and a polymerization degree of the desired polyvinyl ester. In general, it is desirably 0.1 % by mass or more and 10 % by mass or less based on the vinyl ester monomers.

There are no particular restrictions to a value of weight-average molecular weight/number average molecular weight (Mw/Mn) of (A) the PVA, but in the light of stability of an emulsion, it is generally 10 or less, preferably 6 or less.

A block character of the remaining vinyl ester groups in (A) the PVA is generally, but not limited to, 1.0 or less, and preferably 0.8 or less, more preferably 0.6 or less in the light of ensuring stability of an emulsion.

The block character described above is a value representing a distribution of hydroxy groups generated by saponification of ester groups and the remaining ester groups, which is 0 to 2. "0" indicates that ester and hydroxy groups are distributed completely as blocks. As the value increases, alternation increases. "1" indicates that ester and hydroxy groups completely randomly exist. "2" indicates that ester and hydroxy groups completely alternately exist.

The above block character can be adjusted, depending on the type of a vinyl ester monomer, the saponification conditions such as a catalyst and a solvent, heating after saponification and the like.

A polyvinyl ester (B) in an emulsion of the present invention constitutes a dispersoid. Examples of a vinyl ester monomer used for synthesis of (B) a polyvinyl ester include vinyl formate, vinyl acetate, vinyl propionate, vinyl butyrate, vinyl valerate, vinyl laurate, vinyl stearate, vinyl pivalate, isopropenyl acetate, vinyl palmitate and vinyl benzoate. A vinyl ester monomer can be homopolymerized or copolymerized with an additional monomer in such an amount that the effects of the present invention are not inhibited. Among these, a homopolymer or copolymer of vinyl acetate is desirable in the light of productivity, economy and handleability.

Examples of an additional monomer copolymerized with the above vinyl ester monomer include unsaturated acids or esters, salts or anhydrides thereof such as (meth)acrylic acid, maleic acid, itaconic acid and crotinic acid; (meth)acrylamide and its derivatives; unsaturated solfonates such as sodium allylsulfonate and sodium methallylsulfonate; alkyl vinyl ethers; ethylenic unsaturated monomers containing an acetoacetyl group; unsaturated monomers containing an oxyalkylene group; unsaturated vinyl monomers containing a quaternary ammonium salt; $\alpha$-olefins such as ethylene, propylene, $\alpha$-octene and $\alpha$-dodecene; vinyl chloride, vinylidene chloride, vinyl fluoride, vinylidene fluoride; (meth)acrylonitrile; vinylalkoxysilanes; and styrene. A copolymerization amount of such an additional monomer in (B) the polyvinyl ester is generally 10 mol% or less.

There are no particular restrictions to a method for producing (B) a polyvinyl ester, and it is preferably produced at the same time as (C) a graft polymer, using a method for producing a dispersion stabilizer for suspension polymerization of the present invention described later.

The graft polymer(C) in the emulsion of the present invention is produced by graft-polymerizing a vinyl ester monomer to a PVA. PVAs used for producing (C) a graft polymer can be suitably, but not limited to, those used as (A) the PVA as described above. Vinyl ester monomers used for producing (C) a graft polymer can be also suitably, but not limited to, those as a vinyl ester monomer used for producing (B) a polyvinyl ester as described above. The graft polymer (C) can be produced by graft polymerization of a PVA with, in addition to a vinyl ester monomer, an additional monomer without departing from the scope of the present invention. Such an additional monomer can be suitably selected from those as an additional monomer to be copolymerized with a vinyl ester monomer in producing (B) a polyvinyl ester as described above. The amount of the units derived from the additional monomer based on the total amount of the monomer units introduced by graft polymerization in (C) the graft polymer is generally 10 mol% or less. There are no particular restrictions to a method for producing (C) a graft polymer, and it is preferably produced by a method for producing a dispersion stabilizer for suspension polymerization of the present invention at the same time as (B) a polyvinyl ester.

A solid in an emulsion of the present invention can contain components other than (A) a PVA, (B) a polyvinyl ester and (C) a graft polymer. A content of such a component in the solid is generally 10 % by mass or less.

A dispersion stabilizer for suspension polymerization of the present invention can contain various additives without departing from the scope of the present invention. Examples of such additives include a polymerization regulator such as aldehydes, halogenated hydrocarbons and mercaptans; a polymerization inhibitor such as phenol compounds, sulfur-containing compounds and N-oxides; a pH adjuster; a cross-linker; a preservative; an antifungal agent; an antiblocking agent; and a defoamer.

When a vinyl compound is suspension-polymerized using a dispersion stabilizer for suspension polymerization of the present invention, (A) a PVA, (B) a polyvinyl ester, and (C) a graft polymer have different actions, respectively. The PVA (A) is mainly present in an interface with the vinyl compound and acts as a surfactant, or acts as a dispersion stabilizer for (B) the polyvinyl ester and (C) the graft polymer. The polyvinyl ester (B) is mainly dissolved in a vinyl compound and involves morphology change of a vinyl resin obtained. The graft polymer (C) has a moiety contributing to dissolution in a vinyl compound and a hydrophilic group, so that it has both effects of (A) a PVA and (B) a polyvinyl ester. Then, the graft polymer (C) is mainly present in an interface with the vinyl compound and acts as a surfactant, or involves morphology change of a vinyl resin obtained. These three components mutually interact, contributing to improving polymerization stability of a vinyl compound and plasticizer absorbency of vinyl resin particles obtained as a dispersion stabilizer for suspension polymerization. In other words, a ratio of these is important for improving performance of a dispersion stabilizer for suspension polymerization of the present invention.

It is important that in an emulsion of the present invention, the amount of (A) the PVA is 0.1 % by mass or more and 18 % by mass or less based on the total amount of (A) the PVA, (B) the polyvinyl ester and (C) the graft polymer. The amount of (A) the PVA is preferably 0.5 % by mass or more and 16 % by mass or less, more preferably 0.5 % by mass or more and 15 % by mass or less. If the amount of (A) the PVA is less than 0.1 % by mass, dispersion of (B) the polyvinyl ester and (C) the graft polymer cannot be stabilized, leading to problems such as a less stable emulsion, reduced plasticizer absorbency of vinyl resin particles obtained and reduced polymerization stability in suspension polymerization. If the amount of (A) the PVA is more than 18 % by mass, viscosity of an emulsion increases, leading to problems such as less handleability, reduced plasticizer absorbency of vinyl resin particles obtained, and reduced polymerization stability in suspension polymerization.

When a dispersion stabilizer for suspension polymerization is produced using a production method of the present invention, the amount of (A) the PVA based on the total amount of (A), (B) and (C) can be adjusted by changing a probability of the graft reaction by adjusting a saponification degree or polymerization degree of (A) the PVA, adjusting the amount of (A) the PVA, using a chain transfer agent or additive, or the like.

In an emulsion of the present invention, it is important that the amount of (C) the graft polymer based on the total amount of (A) the PVA, (B) the polyvinyl ester and (C) the graft polymer is 7 % by mass or more and 80 % by mass or less. The amount of (C) the graft polymer is preferably 10 % by mass or more and 70 % by mass or less, more preferably 10 % by mass or more and 65 % by mass or less. If the amount of (C) the graft polymer is less than 7 % by mass or more than 80 % by mass, plasticizer absorbency of vinyl resin particles obtained may be reduced and polymerization stability in suspension polymerization may be reduced.

When a dispersion stabilizer for suspension polymerization is produced using the production method of the present invention described later, the amount of (C) the graft polymer based on the total amount of (A), (B) and (C) can be adjusted by changing the amount of (B) a polyvinyl ester grafted to (A) the PVA by adjusting a saponification degree or polymerization degree of (A) the PVA, adjusting the amount of (A) the PVA, changing the synthesis conditions, using a chain transfer agent and the like.

The amounts of (A) the PVA, (B) the polyvinyl ester and (C) the graft polymer emulsion can be determined using difference in solubility of these in water or an organic solvent. In the present invention, the amount of (A) the PVA in the emulsion is determined as described below. The emulsion is centrifuged to collect a supernatant. The supernatant contains only (A) the PVA which is water-soluble. Thus, the supernatant is dried and the weight of the precipitated solid is measured to determine the amount of (A) the PVA.

The amount of (C) the graft polymer in the emulsion of the present invention is determined using difference in a solubility in toluene (see JP 10-081865 A). This method utilizes that (A) the PVA and (C) the graft polymer are insoluble in toluene. A solid obtained by drying an emulsion is immersed in toluene. After a time adequate to dissolve soluble materials (about one day), the insoluble material in toluene is collected. The insoluble material can be dried, followed by measuring its weight, from which the total amount of (A) the PVA and (C) the graft polymer in the emulsion can be determined. The amount of (A) the PVA determined as described above can be subtracted from the total amount to determine the amount of (C) the graft polymer in the emulsion. It is also known that an emulsion is washed with acetone and water to determine the amount of a graft polymer (see Patent Reference No. 5, and JP 2005-82665 A). The polyvinyl ester is removed by acetone, the PVA is removed by water, and then the amount of the graft polymer can be determined. A value obtained by this method is substantially equal to a value obtained by the above method using toluene.

The total amount of (A) the PVA, (B) the polyvinyl ester and (C) the graft polymer in the emulsion of the present invention is preferably 30 % by mass or more and 70 % by mass or less, more preferably 35 % by mass or more and 70 % by mass or less, particularly preferably 35 % by mass or more and 65 % by mass or less. If the amount is less than 30 % by mass, it may lead to problems such as undesirably lower productivity and economy and lower solution stability of the emulsion due to excessively reduced emulsion viscosity. If the amount is more than 70 % by mass, viscosity of the emulsion may increase, leading to deteriorated handleability.

It is important that a weight-average molecular weight as determined using gel permeation chromatography of a solid in the emulsion of the present invention is 1,100,000 or less. The weight-average molecular weight is preferably 1,000,000 or less, more preferably 850000 or less, further preferably 650,000 or less, particularly preferably 550,000 or less, most preferably 350,000 or less. If a weight-average molecular weight of the solid is more than 1,100,000, it leads to problems such as reduced plasticizer absorbency of vinyl resin particles obtained and reduced polymerization stability in suspension polymerization of a vinyl compound. It is also unfavorable due to increase in emulsion viscosity and deteriorated standing stability. A weight-average molecular weight of the solid is generally 30,000 or more. In the present invention, a weight-average molecular weight of the solid in the emulsion can be determined by measuring a solid obtained by drying the emulsion by gel permeation chromatography.

When a dispersion stabilizer for suspension polymerization is produced using a production method of the present invention as described later, the weight-average molecular weight can be adjusted by changing length of backbone and branches of (C) the graft polymer by adjusting a saponification degree or polymerization degree of (A) the PVA, adjusting the type and the amount of (A) the PVA, selection of a polymerization initiator, the use of a chain transfer agent and the like.

In the emulsion of the present invention, an average particle size of particles contained in the emulsion as determined by dynamic light scattering is preferably 2 $\mu$m or less, more preferably 1 $\mu$m or less, further preferably 0.8 $\mu$m or less. If an average particle size is more than 2 $\mu$m, stability of the emulsion may be deteriorated. Measurement by dynamic light scattering can be conducted using, for example, a laser zeta potential analyzer ELS-8000 from Otsuka Electronics Co., Ltd. An average particle size can be adjusted by appropriately selecting a weight ratio of a vinyl ester monomer and (A) the PVA during synthesis and the production conditions of an emulsion (a polymerization temperature, a polymerization time, the type of monomers, the type of a polymerization initiator, timing of adding (A) the PVA, the amount of a chain transfer agent and the like).

In an emulsion of the present invention, it is preferable that the emulsion is produced by polymerizing a vinyl ester monomer in an aqueous medium in the presence of (A) the PVA. According to the method, an emulsion of the present invention can be easily produced. The raw vinyl ester monomer can be suitably selected from those used for production of (B) a polyvinyl ester as described above. In the above production method, an additional monomer in addition to a vinyl ester monomer can be involved in polymerization without departing from the scope of the present invention. The additional monomer can be suitably selected from those as an additional monomer to be copolymerized with a vinyl ester monomer in production of (B) a polyvinyl ester as described above.

In the above production method, a polymerization method can be, but not limited to, emulsion polymerization wherein a vinyl ester monomer and a polymerization initiator are added to an aqueous solution of (A) the PVA. Here, a vinyl ester monomer can be added at one time or continuously. Examples of a polymerization initiator include a peroxide polymerization initiator such as hydrogen peroxide, ammonium persulfate and potassium persulfate. The polymerization initiator can be used in a redox system in combination with a reducing agent. Here, hydrogen peroxide is generally combined with tartaric acid, sodium tartate, L-ascorbic acid and/or Rongalite. Furthermore, ammonium persulfate and potassium persulfate are sometimes combined with sodium hydrogen sulfite and sodium hydrogen carbonate.

In the above production method, polymerization is preferably conducted in the presence of a chain transfer agent in the light of emulsion stabilization and easy adjustment of a proportion of (C) the graft polymer. Furthermore, the use of a chain transfer agent lowers a weight-average molecular weight of a solid in an emulsion, resulting in further improving performance of a dispersion stabilizer for suspension polymerization. The chain transfer agent can be added at one time or continuously. The amount of the chain transfer agent is preferably 0.01 parts by mass or more and 50 parts by mass or less, more preferably 0.05 parts by mass or more and 50 parts by mass or less, further preferably 0.1 parts by mass or more and 40 parts by mass or less, based on 100 parts by mass of the vinyl ester monomer.

The chain transfer agent can be a thiol or aldehyde compound. There are no particular restrictions to the thiol compound, and both alkylthiols and thiols having a functional group can be used. When an alkylthiol is used, a straight-chain or branched alkyl thiol with 4 to 18 carbon atoms is preferable in the light of handling and smell. Examples include n-butanethiol, n-pentanethiol, n-hexanethiol, cyclohexanethiol, adamantanethiol, n-heptanethiol, n-octanethiol, n-nonanethiol, n-decanethiol, n-undecanethiol, n-dodecanethiol, t-dodecanethiol, n-hexadecanethiol and n-octadecanethiol. Examples of a thiol having a functional group include thioacetic acid, mercaptoacetic acid, 3-mercaptopropionic acid, 3-mercaptopropanesulfonic acid and 2-mercaptoethanol. In the above production method, chain transfer agents can be used alone or in combination of two or more.

In the production method of the present invention, it is preferable to polymerize 100 parts by mass of the vinyl ester monomer to 1 to 32 parts by mass of (A) the PVA. The amount of (A) the PVA is more preferably 2 to 27 parts by mass, further preferably 2 to 24 parts by mass, particularly preferably 2 to 21 parts by mass, based on 100 parts by mass of the vinyl ester monomer. If the amount of (A) the PVA is more than 32 parts by mass, viscosity of an emulsion obtained may increase, leading to reduction in productivity and handleability. Furthermore, viscosity of an aqueous solution of (A) the PVA during synthesis of an emulsion may increase, making it difficult to obtain an emulsion with a high solid content, leading to reduction in productivity and handleability. If the amount of (A) the PVA is less than 1 part by mass, a particle size of the emulsion obtained may increase, leading to deterioration in emulsion stability. Furthermore, the vinyl ester monomer may form blocks during emulsion synthesis, resulting in failing to give an emulsion or deterioration in performance of the vinyl compound as a dispersion stabilizer for suspension polymerization.

In the production method, a reaction rate of (A) the PVA as a raw material is preferably 20 % by mass or more and 97 % by mass or less, more preferably 22 % by mass or more and 95 % by mass or less, further preferably 25 % by mass or more and 93 % by mass or less. A reaction rate of (A) the PVA as a raw material is a rate of the PVA as a raw material incorporated into (C) the graft polymer. This rate can be adjusted by adjusting a saponification degree and a polymerization degree of (A) the PVA and adjusting reactivity of (A) the PVA with the vinyl ester monomer. If a reaction rate of (A) the PVA is less than 20 % by mass, hydrophilicity of (C) the graft polymer may be so reduced that plasticizer absorbency of the vinyl resin particles obtained may be less effectively lowered. Furthermore, fish eyes may increase in the step of processing a vinyl resin obtained. If the rate is more than 97 % by mass, dispersion stability of (B) the polyvinyl ester and (C) the graft polymer in the emulsion may be reduced, leading to deterioration in solution stability of the emulsion.

[Production of a vinyl resin]

A suitable embodiment of the present invention is a method for producing a vinyl resin, wherein a vinyl compound is suspension-polymerized in an aqueous medium in the presence of a dispersion stabilizer for suspension polymerization of the present invention. Examples of a vinyl compound as a raw material include halogenated vinyls such as vinyl chloride; vinyl esters such as vinyl acetate and vinyl propionate; acrylic acid, methacrylic acid, and esters and salts thereof; maleic acid, fumaric acid, and esters and anhydrides thereof; styrene; acrylonitrile; vinylidene chloride; and vinyl ether. Among these, a dispersion stabilizer for suspension polymerization of the present invention is particularly suitably used for suspension-polymerizing vinyl chloride alone or vinyl chloride with a monomer which is copolymerizable with vinyl chloride. Examples of a monomer which is copolymerizable with vinyl chloride include vinyl esters such as vinyl acetate and vinyl propionate; (meth)acrylates such as methyl (meth)acrylate and ethyl (meth)acrylate; $\alpha$-olefins such as ethylene and propylene; unsaturated dicarboxylic acids such as maleic anhydride and itaconic acid; acrylonitrile; styrene; vinylidene chloride; and vinyl ether.

For suspension polymerization of a vinyl compound, an oil-soluble or water-soluble polymerization initiator commonly used for polymerization of a vinyl chloride monomer or the like can be used. Examples of an oil-soluble polymerization initiator include percarbonates such as diisopropyl peroxydicarbonate, di-2-ethylhexyl peroxydicarbonate and diethoxyethyl peroxydicarbonate; perester compounds such as t-butyl peroxyneodecanate, t-butyl peroxypivalate, t-hexyl peroxypivalate and α-cumyl peroxyneodecanate; peroxides such as acetylcyclohexylsulfonyl peroxide, 2,4,4-trimethylpentyl-2-peroxyphenoxy acetate, 3,5,5-trimethylhexanoyl peroxide and lauroyl peroxide; and azo compounds such as azobis-2,4-dimethylvaleronitrile and azobis(4-2,4-dimethylvaleronitrile). Examples of a water-soluble polymerization initiator include potassium persulfate, ammonium persulfate, hydrogen peroxide and cumene hydroperoxide. These oil-soluble or water-soluble polymerization initiators can be used alone or in combination of two or more.

In suspension polymerization of a vinyl compound, there are no particular restrictions to a polymerization temperature, and it can be as low as about 20 °C or as high as higher than 90 °C. Furthermore, the use of a polymerization vessel equipped with a reflux condenser for increasing a heat removal efficiency is also a preferable embodiment.

In suspension polymerization of a vinyl compound, there are no particular restrictions to a ratio of a vinyl compound charged to an aqueous medium. Generally, as a ratio of the vinyl compound to the aqueous medium is reduced, polymerization is more stable while productivity is reduced. As a ratio of the vinyl compound to the aqueous medium is higher, productivity is higher while polymerization is more unstable. In a method for producing a vinyl resin of the present invention, a mass ratio of a vinyl compound to an aqueous medium (vinyl compound/aqueous medium) is preferably 0.57 to 1.25, more preferably 0.57 to 1.11. If a mass ratio (vinyl compound/aqueous medium) is less than 0.57, productivity of a vinyl resin obtained may be lowered. If a mass ratio (vinyl compound/aqueous medium) is more than 1.25, polymerization stability may be deteriorated, leading to formation of coarse resin particles. Furthermore, fish eyes in a product formed by molding a vinyl resin obtained may be increased.

In the light of improving productivity, a mass ratio of a vinyl compound to an aqueous medium (vinyl compound/aqueous medium) is preferably 0.75 to 1.25 in a method for producing a vinyl resin of the present invention. A dispersion stabilizer for suspension polymerization of the present invention is more effective in improving polymerization stability even under the conditions where polymerization generally tends to be unstable with a higher ratio of the vinyl compound as described above.

In a method for producing a vinyl resin of the present invention, it is preferable to conduct suspension polymerization of a vinyl compound in the presence of a dispersion stabilizer for suspension polymerization of the present invention and a PVA with a viscosity average polymerization degree of 650 or more and a saponification degree of 65 mol% or more. Combining such a PVA, polymerization stability is further improved and formation of coarse resin particles is further inhibited.

In the above method for producing a vinyl resin, a saponification degree of a PVA which is combined with a dispersion stabilizer for suspension polymerization of the present invention is preferably 65 mol% or more, more preferably 65 mol% or more and 95 mol% or less, further preferably 70 mol% or more and 90 mol% or less. If a saponification degree of the PVA is less than 65 mol%, water-solubility of the PVA may be lowered, leading to deterioration of handleability. A saponification degree of the PVA is determined in accordance with JIS-K6726.

A viscosity average polymerization degree of a PVA which is combined with a dispersion stabilizer for suspension polymerization of the present invention is preferably 650 or more, more preferably 650 or more and 8000 or less, further preferably 650 or more and 3500 or less. If a viscosity average polymerization degree of the PVA is less than 650, polymerization stability may be deteriorated. A viscosity average polymerization degree of the PVA is calculated using Nakajima's equation (Akio Nakajima, "Kobunshi Kagaku" (Polymer Chemistry) 6(1949)) from a limiting viscosity of an acetone solution of a polyvinyl ester which is produced by substantially completely saponifying the PVA and acetylizing the product.

The amount of a PVA combined with a dispersion stabilizer for suspension polymerization of the present invention is preferably, but not limited to, 40 to 900 parts by mass, more preferably 100 to 900 parts by mass, based on 100 parts by mass of a dispersion stabilizer for suspension polymerization of the present invention. If the amount of the PVA is less than 40 parts by mass, polymerization stability may be adversely affected. If the amount is more than 900 parts by mass, addition of a dispersing agent for suspension polymerization of the present invention may be unsatisfactorily effective.

PVAs which are combined with a dispersion stabilizer for suspension polymerization of the present invention can be used alone or in combination of two or more.

In a method for producing a vinyl resin of the present invention, a dispersion stabilizer for suspension polymerization of the the present invention can be combined with a water-soluble cellulose ether such as methylcellulose, hydroxyethylcellulose, hydroxypropylcellulose and hydroxypropylmethylcellulose; a water-soluble polymer such as gelatin; an oil-soluble emulsifier such as sorbitan monolaurate, sorbitan trioleate, glycerin tristearate and ethylene oxide-propylene oxide block copolymer; and/or a water-soluble emulsifier such as polyoxyethylene sorbitane monolaurate, polyoxyethylene glycerin oleate and sodium laurate, and the like, which are commonly used for suspension polymerization of a vinyl compound. The amount of these is preferably, but not limited to, 0.01 parts by mass or more and 1.0 parts by mass or less based on 100 parts by mass of the vinyl compound.

EXAMPLES

The present invention will be further detailed with reference to Examples. In Examples and Comparative Examples below, "part(s)" and "%" denote, unless otherwise stated, part(s) by mass and % by mass, respectively.

An emulsion produced by the production examples below were evaluated by the following methods.

[Weight-average molecular weight (Mw) of an emulsion]

An emulsion was dried at a temperature of 20 °C and a humidity of 65 %, to form an emulsion film with a thickness of about 500 μm. The film was dissolved in hexafluoroisopropanol to give a solution in which the solid in the emulsion was dissolved, and then the solution was subjected to measurement by gel permeation chromatography (GPC). [Apparatus: Tosoh Corporation, HLC-8220GPC, Column: GMHHR-H(S)×2, Mobile phase: hexafluoroisopropanol (HFIP) + 20 mM $CF_3COONa$, Measurement temperature: 40 °C, Standard: polymethyl methacrylate (PMMA)]

[Proportion of (A) a PVA based on the total amount of a solid in an emulsion]

An emulsion was dissolved to a concentration of about 5 %. About 2 g of the diluted emulsion was placed in an aluminum vessel and dried at 105 °C for 3 hours, to give a solid, whose weight was then measured. A precise solid content "a" (%) of the diluted solution was determined from the following equation.

$$\text{Solid content "a" (\%)} = [\text{Solid (g) / Diluted emulsion before drying (g)}] \times 100$$

About 100 g of the diluted emulsion whose solid content had been preliminarily determined was precisely weighed and centrifuged for 1 hour under the conditions of a temperature: 10 °C, a rotationary frequency: 20,000 rpm, and the whole supernatant was collected. About 80 g of the supernatant obtained was placed in an aluminum vessel and dried at 105 °C for 24 hours to absolute dry, to give a dried solid. A weight of the solid obtained from the supernatant was measured and then a proportion of (A) the PVA based on the total amount of the emulsion solid was determined from the following equation.

$$\text{Proportion of (A) a PVA (\%)} = 100 \times c/[(a/100) \times b]$$

a: solid content of a diluted emulsion (%)
b: weight of a diluted emulsion (g)
c: weight of a solid in a supernatant (g)

[Reaction rate of (A) the PVA]

A reaction rate of (A) a PVA as a raw material was determined using "a", "b" and "c" used for determining a proportion of (A) a PVA based on the total amount of a solid in an emulsion, from the following equation. It is, herein, assumed that the raw vinyl ester monomer is completely consumed.

$$\text{Reaction rate (\%) of (A) a PVA as a raw material} = 100 \times \{1-c/[(a/100) \times b \times d]\}$$

"a", "b", "c": these are as defined in determining a proportion of (A) a PVA based on the total amount of a solid in an emulsion;
"d": mass ratio of a PVA used for producing an emulsion, based on the total amount of the PVA and the vinyl ester monomer used for producing the emulsion [PVA/(PVA+monomer)]

[Proportion of (B) a polyvinyl ester based on the total amount of a solid in an emulsion]

An emulsion was dried at 20 °C and a humidity of 65 % to a thickness of about 500 μm, to form an emulsion film. About 0.5 g of the film was precisely weighed in an aluminum vessel and dried at 105 °C for 3 hours. Its weight was again measured. A solid content α (%) in the film was determined from the following equation.

$$\text{Solid content } \alpha \ (\%) \text{ in a film} = 100 \times [\text{film weight after drying (g)/film weight before drying (g)}]$$

About 0.5 g of an emulsion film before drying whose solid content had been preliminarily determined was precisely weighed, immersed in about 50 mL of toluene, and standed at room temperature for 24 hours. The vessel containing these was gently swirl by hand, and an insoluble was immediately collected by a 200 mesh stainless steel screen. The insoluble together with the metal screen was dried 105 °C for 24 hours and its weight was measured. A proportion of (A) the PVA and (C) the graft polymer which were insoluble in toluene based on the total amount of the solid in the emulsion was determined from the following equation.

$$\text{Components insouble in toluene } (\%) = 100 \times \text{dry weight of the insolubles (g)/[film before drying (g)} \times (\alpha/100)]$$

Furthermore, a proportion of (B) a polyvinyl ester based on the total amount of a solid in an emulsion was determined from the following equation.

$$\text{Proportion of (B) a polyvinyl ester } (\%) = 100 - \text{components insoluble in toluene } (\%)$$

[Proportion of (C) a graft polymer based on the total amount of a solid in an emulsion]

A proportion of (C) a graft polymer based on the total amount of a solid in an emulsion was determined using a proportion of (A) a PVA based on the total amount of a solid in an emulsion and a proportion of (B) a polyvinyl ester based on the total amount of a solid in an emulsion as described above, from the following equation.

$$\text{Proportion of (C) a graft polymer } (\%) = 100 - [\text{proportion of (A) a PVA } (\%) + \text{proportion of (B) a polyvinyl ester } (\%)]$$

[Production Example 1: production of Em-1]

In a 2 liter glass polymerization vessel equipped with a reflux condenser, a dropping funnel, a thermometer and a nitrogen inlet were charged 240 parts of ion-exchange water and 20 parts of PVA-2(polymerization degree: 300, saponification degree: 80 mol%) as (A) a PVA, which was completely dissolved at 80 °C. After nitrogen substitution, to this aqueous PVA solution were sequentially added with stirring at 200 rpm 40 parts of a 1 % aqueous solution of ammonium persulfate and 100 parts of vinyl acetate monomer over 3 hours. Consumption of the monomer in the reaction solution was confirmed, indicating completion of the polymerization. There was obtained an emulsion with a solid content: 30 %, a weight-average molecular weight (Mw): 850,000, a proportion of PVA-2 based on the total amount of the solid in the emulsion: 12 %, a proportion of (B) a polyvinyl ester based on the total amount of the solid in the emulsion: 27 %, a proportion of (C) a graft polymer based on the total amount of the solid in the emulsion: 61 %, and a reaction rate of PVA-2 as a raw material: 31 %.

[Production Examples 2 to 10, 16 to 18, 20 to 22, 24: production of Em-2 to 10, 16 to 18, 20 to 22, 24]

The emulsions shown in Table 1 (Em-2 to 10, 16 to 18, 20 to 22, 24) were produced as described in Production Example 1, except that the type of a vinyl ester monomer as a raw material, the type and the amount of a PVA as a raw material and the charge amount of ion-exchange water were changed. Table 1 shows the production conditions and the physical properties of an emulsion obtained. Table 2 shows the type of a PVA as a raw material.

[Production Examples 11 to 15, 19: production of (Em-11 to 15, 19)]

The emulsions shown in Table 1 (Em-11 to 15, 19) were produced as described in Production Example 1, except that the type and the amount of a PVA used and a charge amount of ion-exchange water were changed and that a chain transfer agent was premixed with a vinyl ester monomer before continuously adding it to an aqueous PVA solution to conduct polymerization. Table 1 shows the production conditions and the physical properties of an emulsion obtained. Table 2 shows the type of a PVA as a raw material. Table 1 also shows the amount of a chain transfer agent based on a vinyl ester monomer. Table 3 shows the type of a chain transfer agent.

[Production Example 23: production of (Em-23)]

Polymerization was tried as described in Production Example 1, except that the amount of a PVA as a raw material and a charge amount of ion-exchange water were changed. However, during dissolving the PVA, viscosity of an aqueous solution was so increased that the solution gelated, failing to initiate polymerization.

[Production Example 25: production of (Em-25)]

Polymerization was conducted as described in Production Example 1, except that the amount of a PVA as a raw material and a charge amount of ion-exchange water were changed. However, polymerization was unstable, so that coarse particles were formed, failing to form an emulsion.

[Table 1]

| | Aqueous emulsion | Synthesis | | | | | | Solid (%) | Physical properties of an aqueous emulsion | | | | |
| | | Vinyl ester monomer | | PVA(A) | | Chain transfer agent | | | A/(A+B+C) (%) | B/(A+B+C) (%) | C/(A+B+C) (%) | Weight-average molecular weight Mw | Reaction rate of A(%) |
| | | Type | Parts | Type | Parts | Type | Total amount wt%/VAc | | | | | | |
| Production Example 1 | Em-1 | Vinyl acetate | 100 | PVA-2 | 20 | - | - | 30 | 12 | 27 | 61 | 850,000 | 31 |
| Production Example 2 | Em-2 | Vinyl propionate | 100 | PVA-2 | 20 | - | - | 30 | 11 | 30 | 59 | 880,000 | 32 |
| Production Example 3 | Em-3 | Vinyl butyrate | 100 | PVA-2 | 20 | - | - | 30 | 11 | 29 | 60 | 860,000 | 32 |
| Production Example 4 | Em-4 | Vinyl acetate | 100 | PVA-3 | 20 | - | - | 30 | 8 | 26 | 66 | 790,000 | 55 |
| Production Example 5 | Em-5 | Vinyl acetate | 100 | PVA-6 | 20 | - | - | 30 | 11 | 22 | 67 | 980,000 | 32 |
| Production Example 6 | Em-6 | Vinyl acetate | 100 | PVA-2 | 5 | - | - | 40 | 3 | 24 | 73 | 800,000 | 42 |
| Production Example 7 | Em-7 | Vinyl acetate | 100 | PVA-2 | 30 | - | - | 40 | 17 | 26 | 57 | 880,000 | 28 |
| Production Example 8 | Em-8 | Vinyl acetate | 100 | PVA-2 | 10 | - | - | 40 | 6 | 25 | 69 | 870,000 | 37 |
| Production Example 9 | Em-9 | Vinyl acetate | 100 | PVA-2 | 20 | - | - | 15 | 11 | 27 | 62 | 860,000 | 32 |
| Production Example 10 | Em-10 | Vinyl acetate | 100 | PVA-2 | 20 | - | - | 50 | 11 | 27 | 62 | 880,000 | 34 |
| Production Example 11 | Em-11 | Vinyl acetate | 100 | PVA-1 | 20 | A | 0.5 | 40 | 13 | 45 | 42 | 620,000 | 24 |

(continued)

| | Aqueous emulsion | Synthesis | | | | | | Physical properties of an aqueous emulsion | | | | | |
| | | Vinyl ester monomer | | PVA(A) | | Chain transfer agent | | Solid (%) | A/ (A+B+C) (%) | B/ (A+B+C) (%) | C/ (A+B+C) (%) | Weight-average molecular weight Mw | Reaction rate of A(%) |
| | | Type | Parts | Type | Parts | Type | Total amount wt%/VAc | | | | | | |
| Production Example 12 | Em-12 | Vinyl acetate | 100 | PVA-1 | 20 | B | 0.5 | 40 | 13 | 62 | 25 | 500,000 | 24 |
| Production Example 13 | Em-13 | Vinyl acetate | 100 | PVA-1 | 20 | C | 0.5 | 40 | 13 | 40 | 47 | 800,000 | 24 |
| Production Example 14 | Em-14 | Vinyl acetate | 100 | PVA-2 | 20 | A | 2.0 | 40 | 11 | 56 | 33 | 210,000 | 37 |
| Production Example 15 | Em-15 | Vinyl acetate | 100 | PVA-2 | 20 | A | 5.0 | 40 | 10 | 71 | 19 | 100,000 | 40 |
| Production Example 16 | Em-16 | Vinyl acetate | 100 | PVA-7 | 20 | - | - | 40 | 15 | 37 | 48 | 990,000 | 12 |
| Production Example 17 | Em-17 | Vinyl acetate | 100 | PVA-8 | 20 | - | - | 40 | 6 | 22 | 72 | 1,310,000 | 62 |
| Production Example 18 | Em-18 | Vinyl acetate | 100 | PVA-1 | 20 | - | - | 40 | 14 | 31 | 55 | 1,200,000 | 15 |
| Production Example 19 | Em-19 | Vinyl acetate | 100 | PVA-4 | 7.5 | A | 0.5 | 40 | 7 | 89 | 4 | 800,000 | 4 |

| | Aqueous emulsion | Synthesis | | | | | | Physical properties of an aqueous emulsion | | | | | |
|---|---|---|---|---|---|---|---|---|---|---|---|---|---|
| | | Vinyl ester monomer | | PVA(A) | | Chain transfer agent | | Solid (%) | A/ (A+B+C) (%) | B/ (A+B+C) (%) | C/ (A+B+C) (%) | Weight-average molecular weight Mw | Reaction rate of A(%) |
| | | Type | Parts | Type | Parts | Type | Total amount wt%/VAc | | | | | | |
| Production Example 20 | Em-20 | Vinyl acetate | 100 | PVA-5 | 2.5 | - | - | 40 | 1 | 12 | 87 | 1,320,000 | 51 |
| Production Example 21 | Em-21 | Vinyl acetate | 100 | PVA-9 | 20 | - | - | 40 | 4 | 11 | 85 | 670,000 | 79 |
| Production Example 22 | Em-22 | Vinyl acetate | 100 | PVA-4 | 7.5 | - | - | 40 | 7 | 88 | 5 | 1,440,000 | 3 |
| Production Example 23 | Em-23 | Vinyl acetate | 100 | PVA-2 | 120 | - | - | 40 | - | - | - | - | - |
| Production Example 24 | Em-24 | Vinyl acetate | 100 | PVA-2 | 120 | - | - | 15 | 43 | 32 | 25 | 690,000 | 22 |
| Production Example 25 | Em-25 | Vinyl acetate | 100 | PVA-2 | 1 | - | - | 40 | - | - | - | - | - |

[Table 2]

| Type | Polymerization degree | Saponification degree (mol%) |
|---|---|---|
| PVA-1 | 300 | 88 |
| PVA-2 | 300 | 80 |
| PVA-3 | 300 | 74 |
| PVA-4 | 2000 | 98 |
| PVA-5 | 1700 | 88 |
| PVA-6 | 1700 | 80 |
| PVA-7 | 150 | 88 |
| PVA-8[1] | 300 | 92 |
| PVA-9[1] | 300 | 80 |
| 1) Saponification product of polyvinyl acetate terminally modified with thioacetic acid | | |

[Table 3]

| Type | Chain transfer agent |
|---|---|
| A | Dodecanethiol |
| B | Octanethiol |
| C | Decyl aldehyde |

[Example 1]

In a 5 liter volume autoclave were individually charged 100 parts of a deionized aqueous solution in which a PVA (polymerization degree: 2000, saponification degree: 80 mol%) is dissolved in an amount of 800 ppm based on a vinyl chloride monomer and Em-1 in an amount of 400 ppm as a solid based on the vinyl chloride monomer, and then additional deionized water in such an amount that the total amount of deionized water became 1,200 parts. Subsequently, in the autoclave were charged 0.65 parts of a 70 % solution of cumyl peroxyneodecanate in toluene and 1.05 parts of a 70 % solution of t-butyl peroxyneodecanate in toluene. Nitrogen was introduced into the autoclave to a pressure of 0.2 MPa and the system was purged. This operation was repeated five times to fully substitute the atmosphere in the autoclave with nitrogen. After charging 940 parts of vinyl chloride, the content in the autoclave was heated to 57 °C with stirring to initiate polymerization of the vinyl chloride monomer. A pressure in the autoclave at the initiation of the polymerization was 0.80 MPa. After about 3.5 hours from initiation of the polymerization, a pressure in the autoclave became 0.70 MPa and then the polymerization was terminated. After removing the unreacted vinyl chloride monomer, the polymerization reactant was removed and dried at 65 °C for 16 hours, to give vinyl chloride resin particles.

(Evaluation of vinyl chloride resin particles)

The vinyl chloride resin particles obtained in Example 1 were evaluated for an average particle size, particle size distribution, plasticizer absorbency and a bulk specific gravity as described below. The evaluation results are shown in Table 4.

(1) Average particle size

Using a Tyler mesh metal screen, particle size distribution was measured by dry screen analysis to determine an average particle size of the vinyl chloride resin particles.

(2) Particle size distribution

A content of JIS standard screen 42 mesh on in vinyl chloride resin particles obtained was expressed as % by mass.

A: less than 0.5 %

B: 0.5 % or more and less than 1 %

C: 1 % or more

A content of JIS standard screen 60 mesh on in vinyl chloride resin particles obtained was expressed as % by mass.

A: less than 5 %

B: 5 % or more and less than 10 %

C: 10 % or more

In terms of both the contents of 42 mesh on particles and 60 mesh on particles, the smaller the value is, the fewer coarse particles are and the sharper particle size distribution is, indicating excellent polymerization stability.

(3) Plasticizer absorbency

In a 5 mL volume syringe in which absorbent cotton (0.02 g) was placed in the bottom were placed 0.5 g of vinyl chloride resin particles and then 1 g of dioctyl phthalate (DOP), and the mixture standed for 15 min. The syringe was centrifuged at 3,000 rpm for 40 min. A weight of DOP absorbed by the vinyl chloride resin particles was determined from a difference in a syringe weight before and after centrifugation and a plasticizer absorbency (%) was determined from the following equation.

$$\text{Plasticizer absorbency (\%)} = 100 \times [\text{DOP absorbed (g)/vinyl chloride resin particles (g)}]$$

(4) Bulk specific gravity

A bulk specific gravity of vinyl resin particles was determined in accordance with JISK6721.

[Examples 2 to 16]

Vinyl chloride resin particles were obtained by suspension polymerization of vinyl chloride as described in Example 1, substituting one of Em-2 to 16 for Em-1. Table 4 shows the evaluation results for the vinyl chloride resin particles.

[Example 17]

Vinyl chloride resin particles were obtained by suspension polymerization of vinyl chloride as described in Example 1, except that the total amount of deionized water was 1,390 parts. Table 5 shows the evaluation results for the vinyl chloride resin particles.

[Comparative Example 1]

Vinyl chloride was suspension-polymerized as described in Example 1, except that Em-1 was not used. Table 4 shows the evaluation results for the vinyl chloride resin particles. Here, in the vinyl chloride resin particles obtained, a 42 mesh-on fraction was large, so that polymerization was unstable and plasticizer absorbency was insufficient.

[Comparative Example 2]

Vinyl chloride was suspension-polymerized as described in Example 1, substituting Em-17 for Em-1. Table 4 shows the evaluation results for the vinyl chloride resin particles. Here, in the vinyl chloride resin particles obtained, both 42 mesh-on and 60 mesh-on fractions were large, so that polymerization was unstable and plasticizer absorbency was insufficient.

[Comparative Example 3]

Vinyl chloride was suspension-polymerized as described in Example 1, substituting Em-18 for Em-1. Table 4 shows the evaluation results for the vinyl chloride resin particles. Here, in the vinyl chloride resin particles obtained, both 42 mesh-on and 60 mesh-on fractions were large, so that polymerization was unstable and plasticizer absorbency was insufficient.

[Comparative Example 4]

Vinyl chloride was suspension-polymerized as described in Example 1, substituting Em-19 for Em-1. Table 4 shows the evaluation results for the vinyl chloride resin particles. Here, in the vinyl chloride resin particles obtained, a 42 mesh-on fraction was large, so that polymerization was unstable and plasticizer absorbency was insufficient.

[Comparative Example 5]

Vinyl chloride was suspension-polymerized as described in Example 1, substituting Em-20 for Em-1. Table 4 shows the evaluation results for the vinyl chloride resin particles. Here, in the vinyl chloride resin particles obtained, both 42 mesh-on and 60 mesh-on fractions were large, so that polymerization was unstable and plasticizer absorbency was insufficient.

[Comparative Example 6]

Vinyl chloride was suspension-polymerized as described in Example 1, substituting Em-21 for Em-1. Table 4 shows the evaluation results for the vinyl chloride resin particles. Here, in the vinyl chloride resin particles obtained, both 42 mesh-on and 60 mesh-on fractions were large, so that polymerization was unstable and plasticizer absorbency was insufficient.

[Comparative Example 7]

Vinyl chloride was suspension-polymerized as described in Example 1, substituting Em-22 for Em-1. Table 4 shows the evaluation results for the vinyl chloride resin particles. Here, in the vinyl chloride resin particles obtained, a 42 mesh-on fraction was large, so that polymerization was unstable and plasticizer absorbency was insufficient.

[Comparative Example 8]

Vinyl chloride was suspension-polymerized as described in Example 1, substituting Em-24 for Em-1. Table 4 shows the evaluation results for the vinyl chloride resin particles. Here, in the vinyl chloride resin particles obtained, both 42 mesh-on and 60 mesh-on fractions were large, so that polymerization was unstable and plasticizer absorbency was insufficient.

[Comparative Example 9]

Vinyl chloride was suspension-polymerized as described in Example 1, substituting a 4 % aqueous solution of an unmodified partially saponified PVA with a polymerization degree of 250 and a saponification degree of 60 mol%, for Em-1. Table 4 shows the evaluation results for the vinyl chloride resin particles. Here, in the vinyl chloride resin particles obtained, plasticizer absorbency was good, but both 42 mesh-on and 60 mesh-on fractions were large, so that an average particle size was very large and polymerization was unstable.

[Comparative Example 10]

Vinyl chloride resin particles were obtained by suspension polymerization of vinyl chloride as described in Example 1, except that the total amount of deionized water was 1,390 parts. Table 5 shows the evaluation results for the vinyl chloride resin particles. Here, in the vinyl chloride resin particles, a 60 mesh-on fraction was large, so that polymerization was less stable and plasticizer absorbency was insufficient.

[Comparative Example 11]

Vinyl chloride resin particles were obtained by suspension polymerization of vinyl chloride as described in Comparative Example 10, except that the total amount of deionized water was 1,390 parts. Table 5 shows the evaluation results for the vinyl chloride resin particles. Here, both 42 mesh-on and 60 mesh-on fractions were large, so that an average particle size was very large and polymerization was unstable. Comparison between Examples 1 and 17, between Comparative Examples 6 and 10, and between Comparative Examples 9 and 11 in Table 5 shows that in the emulsion of the present invention, a proportion of vinyl chloride used is large, so that even under the conditions where polymerization generally tends to be unstable, 42 mesh-on and 60 mesh-on fractions can be kept small in comparison with other dispersing agents and the emulsion can be excellently effective, particularly in terms of polymerization stability.

[Table 4]

| | Dispersion stabilizer for suspension polymerization | Evaluation results of vinyl chloride resin particles | | | | |
|---|---|---|---|---|---|---|
| | | Average particle size ($\mu$m) | Particle size distribution | | Plasticizer absorbency (%) | Bulk specific gravity (g/cc) |
| | | | 42 mesh on | 60 mesh on | | |
| Example 1 | Em-1 | 159.4 | A | A | 20.7 | 0.490 |
| Example 2 | Em-2 | 161.2 | A | A | 20.5 | 0.488 |
| Example 3 | Em-3 | 163.4 | A | A | 20.6 | 0.491 |
| Example 4 | Em-4 | 165.4 | A | A | 21.0 | 0.484 |
| Example 5 | Em-5 | 150.3 | A | A | 20.0 | 0.503 |
| Example 6 | Em-6 | 163.7 | A | A | 21.0 | 0.494 |
| Example 7 | Em-7 | 154.3 | A | A | 20.1 | 0.499 |
| Example 8 | Em-8 | 161.3 | A | A | 20.9 | 0.484 |
| Example 9 | Em-9 | 159.3 | A | A | 20.6 | 0.488 |
| Example 10 | Em-10 | 160.1 | A | A | 20.3 | 0.489 |
| Example 11 | Em-11 | 163.5 | A | A | 21.6 | 0.488 |
| Example 12 | Em-12 | 165.3 | A | A | 22.0 | 0.486 |
| Example 13 | Em-13 | 161.3 | A | A | 20.5 | 0.483 |
| Example 14 | Em-14 | 165.7 | A | A | 23.5 | 0.479 |
| Example 15 | Em-15 | 166.3 | A | A | 25.0 | 0.468 |
| Example 16 | Em-16 | 149.9 | B | B | 19.0 | 0.504 |
| Comparative Example 1 | - | 150.3 | C | A | 11.8 | 0.533 |
| Comparative Example 2 | Em-17 | 154.6 | C | B | 15.5 | 0.519 |
| Comparative Example 3 | Em-18 | 152.5 | C | B | 17.3 | 0.502 |
| Comparative Example 4 | Em-19 | 154.8 | C | A | 15.3 | 0.505 |
| Comparative Example 5 | Em-20 | 150.2 | C | B | 15.9 | 0.510 |
| Comparative Example 6 | Em-21 | 153.8 | B | B | 15.6 | 0.514 |
| Comparative Example 7 | Em-22 | 146.2 | C | A | 15.0 | 0.529 |

(continued)

| | Dispersion stabilizer for suspension polymerization | Evaluation results of vinyl chloride resin particles | | | | |
|---|---|---|---|---|---|---|
| | | Average particle size ($\mu$m) | Particle size distribution | | Plasticizer absorbency (%) | Bulk specific gravity (g/cc) |
| | | | 42 mesh on | 60 mesh on | | |
| Comparative Example 8 | Em-24 | 156.7 | C | C | 16.3 | 0.470 |
| Comparative Example 9 | PVA | 213.4 | C | C | 24.7 | 0.450 |

[Table 5]

| | Dispersion stabilizer for suspension polymerization | Vinyl chloride monomer/water | Evaluation results of vinyl chloride resin particles | | | | |
|---|---|---|---|---|---|---|---|
| | | | Average particle size ($\mu$m) | Particle size distribution | | Plasticizer absorbency (%) | Bulk specific gravity (g/cc) |
| | | | | 42 mesh on | 60 mesh on | | |
| Example 1 | Em-1 | 940/1200 | 159.4 | A | A | 20.7 | 0.490 |
| Example 17 | Em-1 | 940/1390 | 154.0 | A | A | 20.8 | 0.490 |
| Comparative Example 6 | Em-21 | 940/1200 | 153.8 | B | B | 15.6 | 0.514 |
| Comparative Example 10 | Em-21 | 940/1390 | 152.1 | A | B | 15.5 | 0.510 |
| Comparative Example 9 | PVA | 940/1200 | 213.4 | C | C | 24.7 | 0.459 |
| Comparative Example 11 | PVA | 940/1390 | 190.7 | C | C | 24.6 | 0.462 |

As shown in Examples, a dispersion stabilizer for suspension polymerization of a vinyl compound which is composed of an aqueous emulsion of the present invention gives vinyl resin particles with a uniform particle size which contain less coarse particles because of higher polymerization stability. The vinyl resin particles are also excellent in plasticizer absorbency. Furthermore, the emulsion can be produced as an emulsion with a solid content of more than 30 % which can be thus charged as it is in a polymerization tank for suspension-polymerizing a vinyl compound. The emulsion is, therefore, very excellent in handleability and economic efficiency. A dispersion stabilizer for suspension polymerization of the present invention is, therefore, industrially very useful.

**Claims**

1. A dispersion stabilizer for suspension polymerization of a vinyl compound, which is composed of an aqueous emulsion,
   wherein the aqueous emulsion comprises a solid comprising (A) a polyvinyl alcohol, (B) a polyvinyl ester, and (C) a graft polymer produced by graft-polymerizing a vinyl ester monomer to a polyvinyl alcohol;
   wherein the amount of (A) the polyvinyl alcohol is 0.1 to 18 % by mass based on the total amount of (A), (B) and (C);
   wherein the amount of (C) the graft polymer is 7 to 80 % by mass based on the total amount of (A), (B) and (C); and
   wherein a weight-average molecular weight of the solid as determined by gel permeation chromatography is 1,100,000 or less.

**2.** The dispersion stabilizer for suspension polymerization as claimed in Claim 1, wherein the total amount of (A) the polyvinyl alcohol, (B) the polyvinyl ester and (C) the graft polymer in the aqueous emulsion is 30 to 70 % by mass.

**3.** The dispersion stabilizer for suspension polymerization as claimed in Claim 1 or 2, wherein (B) the polyvinyl ester is a polyvinyl acetate.

**4.** A method for producing the dispersion stabilizer for suspension polymerization as claimed in any of Claims 1 to 3, wherein the aqueous emulsion is obtained by polymerizing the vinyl ester monomer in an aqueous medium in the presence of (A) the polyvinyl alcohol.

**5.** The method for producing a dispersion stabilizer for suspension polymerization as claimed in Claim 4, wherein 100 parts by mass of the vinyl ester monomer based on 1 to 32 parts by mass of (A) the polyvinyl alcohol is polymerized.

**6.** The method for producing a dispersion stabilizer for suspension polymerization as claimed in Claim 4 or 5, wherein the polymerization is conducted in the presence of a chain transfer agent.

**7.** The method for producing a dispersion stabilizer for suspension polymerization as claimed in any of Claims 4 to 6, wherein a reaction rate of (A) the polyvinyl alcohol as a raw material is 20 to 97 % by mass.

**8.** A method for producing a vinyl resin, wherein a suspension-polymerization of a vinyl compound is conducted in an aqueous medium in the presence of the dispersion stabilizer for suspension polymerization as claimed in any of Claims 1 to 3.

**9.** The method for producing a vinyl resin as claimed in Claim 8, wherein a mass ratio of the vinyl compound to the aqueous medium (vinyl compound/aqueous medium) is 0.75 to 1.25.

## INTERNATIONAL SEARCH REPORT

International application No.

PCT/JP2013/079675

### A. CLASSIFICATION OF SUBJECT MATTER

*C08F261/04*(2006.01)i, *C08F2/20*(2006.01)i, *C08L29/04*(2006.01)i, *C08L31/02*
(2006.01)i, *C08L51/00*(2006.01)i

According to International Patent Classification (IPC) or to both national classification and IPC

### B. FIELDS SEARCHED

Minimum documentation searched (classification system followed by classification symbols)
C08F261/00-263/08, C08F2/00-2/60, C08L1/00-101/14

Documentation searched other than minimum documentation to the extent that such documents are included in the fields searched
Jitsuyo Shinan Koho          1922-1996     Jitsuyo Shinan Toroku Koho      1996-2014
Kokai Jitsuyo Shinan Koho     1971-2014     Toroku Jitsuyo Shinan Koho      1994-2014

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2005-82665 A (Kuraray Co., Ltd.),<br>31 March 2005 (31.03.2005),<br>claims 1 to 5; paragraphs [0026] to [0029],<br>[0031], [0036], [0039], [0052], [0055]<br>(Family: none) | 1-4,7-9<br>5,6 |
| A | JP 2004-189891 A (Kuraray Co., Ltd.),<br>08 July 2004 (08.07.2004),<br>claims 1 to 4; paragraphs [0024] to [0028]<br>(Family: none) | 1-9 |
| A | JP 2005-334767 A (KRI Inc.),<br>08 December 2005 (08.12.2005),<br>claims 1 to 3; paragraph [0036]<br>(Family: none) | 1-9 |

☒  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 January, 2014 (20.01.14) | 28 January, 2014 (28.01.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/079675

C (Continuation).    DOCUMENTS CONSIDERED TO BE RELEVANT

| Category* | Citation of document, with indication, where appropriate, of the relevant passages | Relevant to claim No. |
|---|---|---|
| A | JP 8-283313 A  (Kuraray Co., Ltd.),<br>29 October 1996 (29.10.1996),<br>claims; paragraph [0020]<br>(Family: none) | 1-9 |
| A | WO 2008/129936 A1  (Kuraray Co., Ltd.),<br>30 October 2008 (30.10.2008),<br>claims 1 to 5; paragraphs [0068] to [0070],<br>[0080]<br>& US 2010/0041828 A1    & EP 2154161 A1<br>& CN 101663330 A | 1-9 |
| A | JP 2007-91886 A  (Aica Kogyo Co., Ltd.),<br>12 April 2007 (12.04.2007),<br>claims 1 to 3; paragraphs [0024] to [0026]<br>(Family: none) | 1-9 |
| A | JP 8-27219 A  (The Nippon Synthetic Chemical<br>Industry Co., Ltd.),<br>30 January 1996 (30.01.1996),<br>claims 1 to 12; paragraphs [0022] to [0035],<br>[0041]<br>(Family: none) | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9100301 A
- JP 10147604 A
- JP 2007063369 A
- JP 10168128 A
- JP 9132608 A
- JP 10081865 A
- JP 2005082665 A

**Non-patent literature cited in the description**

- **AKIO NAKAJIMA.** *Kobunshi Kagaku,* 1949, vol. 6